# EUROPEAN PATENT SPECIFICATION

(11) **EP 1 538 136 B1**
(45) Date of publication and mention of the grant of the patent: **08.03.2006**
(21) Application number: 03425775.8
(22) Date of filing: 02.12.2003
(51) Int. Cl.: C05F 11/10

(54) **Fertilizer composition to stimulate the absorption of nutritive substances in plants**
Düngemittel zum Fördern der Aufnahme der Nährungsmittel in Pflanzen
Engrais pour stimuler l'absorption des substances nutritives par les plantes

(43) Date of publication of application: 08.06.2005
(73) Proprietor: Valagro S.p.A., 66040 Piazzano di Atessa (CH) (IT)
(72) Inventor: Cambri, David, 66038 San Vito (Chieti) (IT); Di Tommaso, Donata, 66030 Frisia (CH) (IT); Sterzi, Dario, 04100 Latina (LT) (IT)
(74) Representative: Tansini, Elio Fabrizio

(56) References cited:
- US-A- 4 764 201
- US-A- 5 750 472

## Description

The present invention relates to a fertilizer composition for stimulating the absorption of nutritive substances in plants. In particular, the present invention relates to a fertilizer composition for increasing vegetal growth by stimulating the absorption of nutritive substances in plants.

Water-soluble derivatives of vitamin K are well known. It is further known about the use of water-soluble derivatives of vitamin K for regulating plant growth. It is known from specific literature about derivatives of vitamin K which are able to stimulate the activity of some components in plants, for instance the inner reduction of nitrate. Moreover, it is known about derivatives of vitamin K which are able to give electrons for the operation of the proton pump (H+-ATPase).

The use of derivatives of vitamin K leads to a higher ion absorption speed thanks to the electrochemical difference both for cations and for anions (in the case of anions through the electrochemical difference of the protons with which they are carried).

It is known to the person skilled in the art that it is highly important from an economic point of view to intervene so as to anticipate crops or increase them by stimulating plant growth. Moreover, the increased efficiency in the absorption of nutritive substances enables a reduced use of fertilizers, which results in further economic and environmental advantages.

Currently, in the field of fertilization environmental problems related to risks of potential pollution due to mineral fertilization of soils are growing more and more important. In particular, it is deemed as necessary to minimize the impact of mineral fertilization on the pollution of ground water and on the salinity of soils. Moreover, the ability to increase plant tolerance to abiotic stress, such as osmotic stress, brings about the advantage thanks to which the plant can overcome stress periods maintaining its growth and preventing physiological damages.

Therefore, there is still the need to have on the market a fertilizer composition enabling to overcome the drawbacks resulting from the use of compositions according to the prior art.

In particular, there is still the need to have a fertilizer composition for increasing vegetal growth by stimulating the absorption of nutritive substances in plants.

The present invention aims at providing a fertilizer composition for overcoming in a particularly advantageous way the drawbacks resulting from compositions according to the state of the art.

In particular, the present invention proposes a fertilizer composition whose active components have been selected thanks' to their synergic effect. According to the present invention, said aim is achieved thanks to a fertilizer composition having the characteristics stated in the appended claims.

The invention will be described as a mere non-limiting examples in some preferred embodiments.

Obviously, though the principle of the invention remains the same, construction details and embodiments can widely vary with respect to what is described and disclosed without however leaving the framework of the present invention.

Experiments carried out by the Applicant has surprisingly shown a synergy between some derivatives of vitamin K, some betaines and salts of alginic acid. In practice, it has been found out that derivatives of vitamin K, betaines and salts of alginic acid, being water-soluble, are able to stimulate the absorption of nutritive substances, to increase the tolerance to abiotic stress and, therefore, plant growth. Advantageously, vitamin K and/or derivatives thereof are chosen from the group comprising: menadione bisulfate, for instance menadione sodium bisulfate and menadione dimethylpyrimidinol bisulfate; salified inorganic esters of menadiol, for instance menadiol tetrasodium diphosphate (caidrine), menadiol disodium disulfate and menadiol dipotassium disulfate; organic esters of menadiol, for instance menadiol dinicotinate dihydrochloride; ammonium quaternary salts of organic esters of menadiol, for instance menadiol bis(trimethylammonium acetate)dichloride; menadiol bis(glucoside tetracetate); 4-amino-2-methyl-1-naphthol hydrochloride; 4-amino-3-methyl-1-naphthol hydrochloride; and 1,4-diamino-methylnaphthalene dihydrochloride. Advantageously, alginic acid and/or derivatives thereof are chosen from the group comprising: sodium alginate, potassium alginate and others.

Alginic acid and/or derivatives thereof are chelating agents and can build complexes with cations such as for instance iron and potassium, which usually give rise to little soluble compounds, above all under unfavorable soil conditions (for instance potassium-retaining clays). These complexes keep said cations in soil in a soluble form, which can therefore be absorbed by the plant. Moreover, these chelating agents can build complexes with cations that could be toxic at high concentrations, for instance aluminum. Alginic acid, therefore, plays a role both in substrate fertility and in tolerance to abiotic stresses.

Advantageously, betaines and/or derivatives thereof are chosen from the group comprising: glycine betaine, γ-amino butyric betaine, δ-amino valeric betaine. For reasons of clarity we shall refer to betaines in general. Betaine is known both as an osmoprotector of vegetal cells and as a molecule with cytoquinine-like activity.

An osmoprotector is stored in the cytosol of a vegetal cell but, being a neutral molecule, does not interfere in the action of cytosol essential enzymes. This is important in case of osmotic stress, both under conditions of low presence of water and under conditions of high salinity, when ion absorption could lead to toxic concentrations. Cytoquinine-like activity stimulates the growth of vegetal cells. Therefore, the present invention relates to a method for stimulating plants by using water-soluble components of derivatives of vitamins K, betaine and of salts of alginic acid.

In particular, the present invention relates to a method for stimulating the growth of plants by using a fertilizer composition containing water-soluble derivatives of vitamin K, of salts of alginic acid and of betaine.

The fertilizer composition according to the invention is used on agricultural, horticultural and garden plants, fruit-bearing plants., vegetables, flowers and ornamental plants and the like, since it has been found out that the absorption of nutritive substances and subsequently the growth of stalks and/or of roots of said plants has increased with respect to the growth of plants on which one or more of the active components such as derivatives of vitamin K, of betaines or salts of alginic acid have not been used. The fertilizer composition can be prepared as granules, wettable powders, tablets, solutions, dispersions or emulsions, and can be used on the soil, on a solid substrate or as an hydroponic solution.

The fertilizer solution further comprises current additives, adjuvants, formulation additives or carriers in liquid (for instance water, methanol and the like) or solid form (for instance clays, talcum, kaolin, bentonite and the like), as are known to the person skilled in the art.

As adjuvant improving the properties of the dispersion or suspension, such as wettability, adhesion, penetration and emulsifying power of the composition, a ionic or non-ionic surfactant agent can be used, or alternatively a polymer such as carboxymethyl cellulose, polyvinyl alcohol and sodium alginate.

In a preferred embodiment, the composition according to the present invention further comprises inorganic salts, both inorganic and organic fertilizers; for instance ammonium nitrate, monoammonium phosphate, potassium nitrate and urea; insecticides, fungicides and herbicides.

Now follows a preferred embodiment of the present invention by mere way of non-limiting example.

In the framework of the present invention, amounts are referred to as percentages by weight with respect to the total weight (100%) of the fertilizer composition. The fertilizer composition comprises:
- A water-soluble algae extract, in an amount of 1 to 70% by weight; preferably of 10 to 60% by weight; for instance of 20 to 50% by weight. The algae extract contains alginic acid, salts of alginic acid and other components such as for instance glucuronic acid and mannuronic acid and/or oligomers thereof in an amount up to 15% by weight, with respect to the total weight (100%) of the algae extract. Moreover, the algae extract contains betaine in an amount up to 1% by weight, with respect to the total weight (100%) of the algae extract.
Extracts of algae *Ascophyllum nodosum,* whose composition is listed in the table below, are commercially available (Producer: Algea, Norway, product trade-name: Algifert K®).

| Elements present in an algae extract | % by weight |
|---|---|
| Humidity | 2-8 |
| Raw proteins | 6-8 |
| Carbohydrates | 35-50 |
| Ashes | 40-55 |
| Alginic acid | 10-20 |
| Mannitol | 4-7 |
| Betaines | 0.1-1 |
| Cytoquinines | 0.06-0.1 |
| Nitrogen (N) | 1.0-1.5 |
| Phosphor (P) | 0.02-0.05 |
| Potassium (K) | 10-16 |
| Calcium (Ca) | 0.5-1.0 |
| Sulfur (S) | 3-9 |
| Magnesium (Mg) | 0.5-0.9 |
| Copper (Cu) | 1-6 ppm |
| Iron (Fe) | 50-200 ppm |
| Manganese (Mn) | 5-12 ppm |
| Zinc (Zn) | 10-100 ppm |
| Boron (B) | 20-100 ppm |
| Molybdenum (Mo) | 1-5 ppm |

- An aqueous vegetal extract, for instance in the form of molasses, in an amount of 1 to 70% by weight; preferably of 10 to 60% by weight; for instance of 20 to 50% by weight. The vegetal extract contains betaines in an amount up to 10% by weight, with respect to the total weight (100%) of vegetal extract.
Extracts of this kind are commercially available, a typical analysis thereof is listed below (Producer: Eridania, Italy; Product trade-name: Borlanda Fluida®).

| Typical analysis of vegetal extract containing betaines obtained from the processing of sugar beet (Source: Eridania) | |
|---|---|
| pH | 5.2 |
| Total N (%) | 3.5 |
| Glycine betaine (%) | 6 |
| Raffinose (%) | 1 |
| Fructose (%) | 2.5 |
| Potassium (%) | 5 |
| Organic carbon (%) | 21 |

- An aqueous extract of *Medicago sativa,* in an amount of 1 to 70% by weight; preferably of 10 to 60% by weight; for instance of 20 to 50% by weight. Said extract contains vitamin K and water-soluble derivatives thereof (Dam et al., *Helv. Chim. Acta,* 22, 310, 1939), such as: menadione bisulfate, for instance menadione sodium bisulfate and menadione dimethylpyrimidinol bisulfate; salified inorganic esters of menadiol, for instance menadiol tetrasodium diphosphate (caidrine), menadiol disodium disulfate and menadiol dipotassium disulfate; organic esters of menadiol, for instance menadiol dinicotinate dihydrochloride; ammonium quaternary salts of organic esters of menadiol, for instance menadiol bis(trimethylammonium acetate)dichloride; menadiol bis(glucoside tetracetate); 4-amino-2-methyl-1-naphthol hydrochloride; 9-amino-3-methyl-1-naphthol hydrochloride; and 1,4-diamino-methylnaphthalene dihydrochloride.
Preferably, the aqueous extract of *Medicago sativa* contains vitamin K and water-soluble derivatives thereof in an amount up to 5% by weight, with respect to the total weight (100%) of the extract.

The typical composition of said extract is listed in the table below (Producer: Valagro, Italy):

| Typical analysis of a vegetal extract containing derivatives of vitamin K obtained from *Medicago sativa* | |
|---|---|
| pH | 6.5 |
| Organic N (%) | 2 |
| Proteins and amino acids (%) | 12.5 |
| Vitamin K (as water-soluble menadiol) (%) | 5 |
| Phosphor (%) | 0.5 |
| Fats (%) | 4.5 |
| Total carotenoids (%) | 0.5 |

Preferably, a fertilizer composition in liquid form can have the following formulation: algae extract 25% wt., vegetal extract 10% wt., concentrated aqueous extract of *Medicago sativa* 25% wt. and water 40% wt.

Alternatively, the liquid composition can be dried so as to obtain a solid composition.

The fertilizer composition comprises 0.1 to 99.9% by weight, preferably 0,5 to 85% by weight of vitamin K, betaines and salts of alginic acid.

Example of preparation of the composition:

For instance, 15 kg of algae extract are dissolved in 40 kg of water by mechanical mixing until a homogenous liquid composition is obtained.

Said mixture basically provides all known elements that are essential for plant growth, as well as auxins, hormones and enzymes. Algae extract is further used to promote leave growth as biocatalyst for starting enzymatic processes.

Microelements are part of the enzymes starting and controlling vital processes of plant growth. Without the metal atom in an enzyme molecule the enzyme is unable to work as prescribed and to help plant growth. After preparing the liquid solution of water and algae extract, 15 kg of aqueous vegetal extract (molasses) are added under mechanical stirring.

Then 30 kg of concentrated aqueous extract of *Medicago sativa* are added.

The fertilizer composition thus obtained is ready for use.

The water-soluble derivatives of vitamin K and the molecules of alginic acid and betaine can be used to stimulate the absorption of nutritive substances and therefore the growth of agricultural, horticultural and garden plants, including fruits, vegetables, flowers, ornamental plants and the like.

The water-soluble derivatives of vitamin K and the molecules alginic acid and betaine can be used at any stage of plant growth. Said compositions can be applied onto leaves, flowers and fruits; at any phenological stage, from seed, vegetative growth, blossoming, production, post-crop stages. They can further be used sequentially in several applications at different stages of plant growth.

For instance, the fertilizer composition can be used in amounts of 5 to 50,000 g/ha, preferably 25 to 25,000 g/ha.

The growth of the plants treated with the compositions according to the present invention proves to be stimulated with respect to untreated plants. In particular, the development of root system and the increase of fresh weight were remarkable, thus anticipating and increasing crop.

Beyond osmotic stress the compositions according to the present invention are efficient on plants suffering from stress due to high temperature, as is the case of a greenhouse.

Now follows by mere way of example an example of application under different conditions. Under three different culture conditions, floating system (hydroponic culture), open field, greenhouse, and on some cultures that are significant from an agrarian point of view, comparative agronomic tests have been carried out with the following fertilizer compositions:

### Composition 1:

Betaine, alginic acid and salts thereof, derivatives of vitamin K

### Composition 2:

Betaine

### Composition 3:

Alginic acid and salts thereof

### Composition 4:

Derivatives of vitamin K

### Composition 5:

Alginic acid and salts thereof, derivatives of vitamin K

### Composition 6:

Betaine, derivatives of vitamin K

### Composition 7:

Betaine, alginic acid and salts thereof

### Control

Water

| | **Glycine betaine (%)** | **Potassium alginate (%)** | **Vitamin K (as water-soluble menadiol) (%)** |
|---|---|---|---|
| **Composition 1** | 1 | 3 | 1 |
| **Composition 2** | 1 | - | - |
| **Composition 3** | - | 3 | - |
| **Composition 4** | - | - | 1 |
| **Composition 5** | - | 3 | 1 |
| **Composition 6** | 1 | - | 1 |
| **Composition 7** | 1 | 3 | - |
| **Control (water)** | - | - | - |

Results have shown that composition 1 has increased significantly, with a value of 15 to 20% with respect to the control, root absorption, with respect to the effect obtained with the other compositions (2 to 7), which, though increasing this property, have shown increases only of 2 to 7% with respect to the control. This increase in absorption efficiency is shown in that the use of composition 1, compared with the use of the other compositions and of water only, has led in all the tests to increases in productivity of 15 to 25%, as well as to increases in the vegetative development (such as leaves and stalks) of 10 to 15%. This shows that plants treated with composition 1, culture conditions and nutritive elements in soil being the same, have not only achieved a higher production but have also succeeded in synthesizing more dry substance, a clear hint at a higher absorption, which can further be seen from an increase in the activity of enzyme ATP-ase.

Other tests have been carried out with the following compositions 8-10, in which a single active substance has been increased for each composition, thus reducing the other two active substances.

Said tests have shown that composition 1 is slightly more efficient than compositions 8-10. Composition 1 has shown an increase in absorption of 10-15% with respect to the control. However, compositions 8-10 have proved more efficient than single active substances.

| | **Glycine betaine (%)** | **Potassium alginate (%)** | **Vitamin K (as water-soluble menadiol) (%)** |
|---|---|---|---|
| **Composition 8** | 1 | 5 | 1 |
| **Composition 9** | 1 | 1 | 3 |
| **Composition 10** | 4 | 1 | 0.5 |

Particularly advantageous compositions have proved those containing: (a) the derivative of vitamin K is chosen among: salified inorganic esters of menadiol, preferably menadiol tetrasodium diphosphate (caidrine), menadiol disodium disulfate and menadiol dipotassium disulfate; organic esters of menadiol, preferably menadiol- dinicotinate dihydrochloride; ammonium quaternary salts of organic esters of menadiol, preferably menadiol bis(trimethylammonium acetate)dichloride; menadiol bis(glucoside tetracetate), (b) the derivative of alginic acid is chosen among: sodium alginate or potassium alginate, preferably potassium alginate, and (c) betaine is glycine betaine.

Advantageously, betaine is present in the composition in an amount of at least 1% by weight.

A particularly advantageous composition contains: sodium or potassium alginate, glycine betaine and caidrine obtained from extracts as described above.

## Claims

1. Fertilizer composition for stimulating the absorption of nutritive substances and plant growth comprising a mixture of: vitamin K and/or derivatives thereof, alginic acid and/or derivatives thereof and betaine.

2. Composition according to claim 1, in which the derivative of vitamin K is water-soluble menadiol and is chosen from the group comprising: salified inorganic esters of menadiol, preferably menadiol tetrasodium diphosphate (caidrine), menadiol disodium disulfate and menadiol dipotassium disulfate; organic esters of menadiol, preferably menadiol dinicotinate dihydrochloride; ammonium quaternary salts of organic esters of menadiol, preferably menadiol bis(trimethylammonium acetate)dichloride; menadiol bis(glucoside tetracetate).

3. Fertilizer composition according to one or more claims 1-2, in which the derivatives of alginic acid are chosen from the group comprising: sodium alginate or potassium alginate.

4. Fertilizer composition according to one or more claims 1-3, in which betaine is chosen from the group comprising: glycine betaine, γ-amino butyric betaine or δ-amino valeric betaine.

5. Fertilizer composition according to one or more claims 1-4, in which the mixture comprises: (a) the derivative of vitamin K is a water-soluble menadiol chosen among: salified inorganic esters of menadiol, preferably menadiol tetrasodium diphosphate (caidrine), menadiol disodium disulfate and menadiol dipotassium disulfate; organic esters of menadiol, preferably menadiol dinicotinate dihydrochloride; ammonium quaternary salts of organic esters of menadiol, preferably menadiol bis(trimethylammonium acetate)dichloride; menadiol bis(glucoside tetracetate), (b) the derivative of alginic acid is chosen among: sodium alginate or potassium alginate, preferably potassium alginate, and (c) betaine is glycine betaine.

6. Fertilizer composition according to claim 5, containing a mixture of: sodium or potassium alginate, glycine betaine and caidrine.

7. Fertilizer composition according to one or more claims 1-6, in which: (a) the derivatives of alginic acid are obtained from a water-soluble algae extract; (b) glycine betaine is obtained from an aqueous vegetal extract, and (c) the derivatives of vitamin K are obtained from an aqueous extract of *Medicago sativa*.

8. Method for stimulating the absorption of nutritive substances and plant growth comprising a step in which a fertilizer composition according to at least one of the claims 1-7 is applied to plant leaves, roots, stalks or onto the soil.

9. Use of a fertilizer composition according to one or more claims 1-7 for stimulating the absorption of nutritive substances and plant growth.

## Patentansprüche

1. Düngemittel zum Fördern der Aufnahme der Nährungsmittel und des Pflanzenwachstums, bestehend aus einer Mischung von: Vitamin K und/oder Derivaten davon, Alginsäure und/oder Derivaten davon und Betain.

2. Mischung gemäß Anspruch 1, **dadurch gekennzeichnet, dass** das Derivat von Vitamin K wasserlösliches Menadiol ist und aus der folgenden Gruppe gewählt ist: anorganische Estersalze aus Menadiol, vorzugsweise Menadiol-Tetranatrium-Diphosphat (Caidrin), Menadiol-Dinatrium-Disulfat und Menadiol-Dikalium-Disulfat; organische Menadiolester, vorzugsweise Menadiol-Dinicotinat-Dihydrochlorid, quartäre Ammoniumsalze aus organischen Menadiolestern, vorzugsweise Menadiol-Bis-(trimethylammoniumacetat)-Dichlorid; Menadiol-Bis(glukosid-Tetracetat).

3. Düngemittel gemäß einem oder mehrerer der Ansprüche 1-2, **dadurch gekennzeichnet, dass** die Derivate der Alginsäure aus der folgenden Gruppe gewählt wurden: Natriumalginat oder Kaliumalginat.

4. Düngemittel gemäß einem oder mehrerer der Ansprüche 1-3, **dadurch gekennzeichnet, dass** das Betain aus der folgenden Gruppe gewählt wurde: Glyzinbetain, γ-Amino-Buttersäurebetain oder δ-Amino-Valerianbetain.

5. Düngemittel gemäß einem oder mehrerer der Ansprüche 1-4, **dadurch gekennzeichnet, dass** die Mischung Folgendes enthält: (a) das Derivat von Vitamin K ist ein wasserlösliches Menadiol, gewählt aus: anorganischen Estersalzen von Menadiol, vorzugsweise Menadiol-Tetranatrium-Diphosphat (Caidrin), Menadiol-Dinatrium-Disulfat und Menadiol-Dikalium-Disulfat; organische Menadiolester, vorzugsweise Menadiol-Dinicotinat-Dihydrochlorid, quartäre Ammoniumsalze aus organischen Menadiolestern, vorzugsweise Menadiol-Bis-(trimethylammoniumacetat)-Dichlorid; Menadiol-Bis(glukosid-Tetracetat), (b) das Derivat der Alginsäure wurde gewählt aus Natriumalginat oder Kaliumalginat, vorzugsweise Kaliumalginat und (c) das Betain ist Glyzinbetain.

6. Düngemittel gemäß Anspruch 5, **dadurch gekennzeichnet, dass** es eine Mischung enthält aus Natrium- oder Kaliumalginat, Glyzinbetain und Caidrin.

7. Düngemittel gemäß einem oder mehrerer der Ansprüche 1-6, **dadurch gekennzeichnet, dass**: (a) die Derivate der Alginsäure aus einem wasserlöslichem Algenextrakt gewonnen werden; (b) Glyzinbetain aus einem wässrigen Pflanzenextrakt gewonnen wird und (c) die Derivate von Vitamin K aus einem wässrigen Extrakt von *Medicago sativa* gewonnen werden.

8. Verfahren zur Förderung der Aufnahme von Nährungsmitteln und Pflanzenwachstum, das einen Schritt beinhaltet, in dem ein Düngemittel gemäß zumindest einem der Ansprüche 1-7 auf Blätter, Wurzeln, Stiele oder auf den Boden aufgebracht wird.

9. Anwendung eines Düngemittels gemäß einem oder mehrerer der Ansprüche 1-7 zur Förderung der Aufnahme von Nährungsmitteln und Pflanzenwachstum.

## Revendications

1. Engrais pour stimuler l'absorption des substances nutritives par les plantes et favoriser leur croissance comprenant un mélange de: vitamine K et/ou ses dérivés, acide alginique et/ou ses dérivés et bétaïne.

2. Engrais selon la revendication 1, dans lequel le dérivé de la vitamine K est le ménadiol soluble dans l'eau et il est choisi parmi le groupe comprenant: esters inorganiques salifiés de ménadiol, de préférence ménadiol tétrasodium diphosphate (caïdrine), ménadiol disodium disulfate et ménadiol dipotassium disulfate; esters organiques de ménadiol, de préférence ménadiol dicotinate di-hydrochlorure; sels quaternaires d'ammonium d'esters organiques de ménadiol, de préférence ménadiol bis(triméthyle ammonium acétate) dichlorure; ménadiol bis(glucoside tétra-acétate).

3. Engrais selon l'une ou plusieurs des revendications 1-2, dans lequel les dérivés de l'acide alginique sont choisis parmi le groupe comprenant: alginate de sodium ou alginate de potassium.

4. Engrais selon l'une ou plusieurs des revendications 1-3, dans lequel la bétaïne est choisie parmi le groupe comprenant: glycine bétaïne, γ-amino butyrique bétaïne ou δ-amino valérique bétaïne.

5. Engrais selon l'une ou plusieurs des revendications 1-4, dans lequel le mélange comporte que: (a) le dérivé de la vitamine K soit un ménadiol soluble dans l'eau choisi parmi: esters inorganiques salifiés de ménadiol, de préférence ménadiol tétrasodium diphosphate (caïdrine), ménadiol disodium disulfate et ménadiol dipotassium disulfate; esters organiques de ménadiol, de préférence ménadiol dicotinate di-hydrochlorure; sels quaternaires d'ammonium d'esters organiques de ménadiol, de préférence ménadiol bis(triméthyle ammonium acétate) dichlorure; ménadiol bis(glucoside tétra-acétate), (b) le dérivé de l'acide alginique soit choisi parmi: alginate de sodium ou alginate de potassium, de préférence alginate de potassium, et (c) la bétaïne soit glycine bétaïne.

6. Engrais selon la revendication 5, contenant un mélange de: alginate de sodium ou de potassium, glycine bétaïne et caïdrine.

7. Engrais selon l'une ou plusieurs des revendications 1-6, dans lequel: (a) les dérivés de l'acide alginique sont obtenus à partir d'un extrait d'algues solubles dans l'eau; (b) la glycine bétaïne est obtenue à partir d'un extrait végétal aqueux, et (c) les dérivés de la vitamine K sont obtenus à partir d'un extrait aqueux de *Medicago sativa*.

8. Procédé pour stimuler l'absorption des substances nutritives par les plantes et favoriser leur croissance comprenant une étape dans laquelle un engrais suivant l'une au moins des revendications 1-7 est appliqué aux feuilles, racines, tiges des plantes ou sur la terre.

9. Usage d'un engrais suivant l'une ou plusieurs des revendications 1-7 pour stimuler l'absorption des substances nutritives par les plantes et favoriser leur croissance.
